# EUROPEAN PATENT SPECIFICATION

(11) **EP 3 867 344 B1**
(45) Date of publication and mention of the grant of the patent: **27.09.2023**
(21) Application number: 19794107.3
(22) Date of filing: 17.10.2019
(51) Int. Cl.: C11D 11/00, C11D 17/04, C11D 17/06, C11D 3/00, C11D 3/20, C11D 3/16, C11D 3/28, C11D 3/34, C11D 3/50, C11D 3/37, C11D 3/22

(54) **SOLUBLE LAUNDRY DETERGENT SHEETS COMPRISING ZINC DIRICINOLEATE**
LÖSLICHE WASCHMITTELFOLIEN ENTHALTEND ZINKDIRICINOLEAT
FEUILLES DE DÉTERGENT À LESSIVE SOLUBLE COMPRENANT LE RICINOLÉATE DE ZINC

(30) Priority: 19.10.2018 DE 102018217949
(43) Date of publication of application: 25.08.2021
(73) Proprietor: Henkel AG & Co. KGaA, 40589 Düsseldorf (DE)
(72) Inventor: JANSSEN, Frank, 51103 Köln (DE); MATULLA, David, 40723 Hilden (DE); SEEBAUER, Beate, 40764 Langenfeld (DE); SCHEFFERS, Birgit, 40593 Düsseldorf (DE); SCHNEIDER, Susanne, 40599 Düsseldorf (DE); KAPITZA, Dorothea, 40595 Düsseldorf (DE)
(74) Representative: Viering, Jentschura & Partner mbB Patent- und Rechtsanwälte
(86) International application number: PCT/EP2019/078261
(87) International publication number: WO 2020/079174

(56) References cited:
- WO-A1-2018/037121
- CA-A1- 3 008 787
- US-A1- 2017 198 237
- US-A1- 2018 223 229
- US-B1- 6 699 826

## Description

The present invention relates to a method for manufacturing a water-soluble laundry detergent sheet from a liquid composition comprising the following components: (a) zinc diricinoleate, (b) at least one surfactant, (c) at least one water-soluble polymer, (d) at least one washing booster, wherein said washing booster is selected from polyalkyleneimines, (e) optionally at least one perfume component, and (h) optionally at least one adjunct detergent ingredient. Also encompassed are the water-soluble laundry detergent sheets obtainable by said method and the use thereof for cleaning textiles and in methods for cleaning textiles.

Customers prefer laundry and cleaning products which are easy to handle, sustainable, small and compact. Due to changes in customers' buying behavior, laundry detergents having a reduced package size are becoming more and more preferred. The higher demand for such products is partly due to the increasing importance of home delivery of products. Furthermore, simple dosing and cleaning properties similar or even improved compared to those of conventional products are desired. Some laundry detergent compositions in sheet form are disclosed in CA 3 008 787 A1, US 6 699 826 B1 and US 2018/223229 A1.

The present invention aims at providing products which can meet one or more of the above-mentioned needs.

The inventors of the present invention surprisingly found that at least some of the above needs are met by a laundry detergent sheet obtainable by the methods of the present invention. Even more surprisingly, it was found that the at least one pro-fragrance compound and/or zinc diricinoleate contained in the laundry detergent sheet provides washed textiles with a long-lasting scent impression, in particular the perception of the scent impression as fresh, and prevents malodor.

In a first aspect the invention therefore relates to a method for manufacturing a water-soluble laundry detergent sheet, the method comprising, consisting essentially of or consisting of the steps:
(i) providing an aqueous liquid, preferably homogenous, composition comprising, consisting essentially of or consisting of the following components:
   (a) zinc diricinoleate,
   (b) at least one surfactant,
   (c) at least one water-soluble polymer,
   (d) at least one washing booster, wherein said washing booster is selected from polyalkyleneimines and optionally further comprises enzymes,
   (e) optionally at least one perfume component, and
   (f) optionally at least one adjunct detergent ingredient;
(ii) applying the composition of step (i) onto a surface such that it forms a layer on said surface;
(iii) drying said layer to obtain a laundry detergent sheet; and
(iv) optionally cutting the laundry detergent sheet into pieces of a desired shape and size; and
(v) optionally packaging one or more laundry detergent sheets obtained in step (iv),

wherein the zinc diricinoleate preferably is contained in the composition in amounts of from 0.001 to 20 wt.-%, preferably in 0.1 to 10 wt.-%, based on the total weight of the composition,
wherein the composition optionally further comprises at least one profragrance compound selected from the group consisting of silicic acid fragrances, oxazolidine of fragrances, β-thio carbonyl profragrances and mixtures thereof and preferably is contained in the composition in amounts of from 0.001 to 10 wt.-%, preferably in 0.1 to 5 wt.-%, based on the total weight of the composition.

In a second aspect, the invention refers to a laundry detergent sheet obtainable by the method according to the present invention.

In a third aspect, the invention also encompasses the use of a laundry detergent sheet according to the present invention for cleaning textiles.

Still another aspect is directed to methods for cleaning textiles, wherein said methods comprise the use of the laundry detergent sheets of the invention.

"At least one", as used herein, relates to one or more, i.e. 1, 2, 3, 4, 5, 6, 7, 8, 9, or more. If used in combination with a compound or component, the term does not relate to the absolute number of molecules but rather to the number of different types of said compound or component. "At least one pro-fragrance compound" thus means that at least one type, but that also 2 or more different types of pro-fragrance compounds can be present in the composition.

"Consists essentially of", as used herein, means that the respective composition comprises at least 50 wt.-%, preferably at least 70 wt.-%, more preferably at least 80 wt.-% of the given components. The residual amount may be made up by non-specified further ingredients. It may be preferred that these further ingredients do not comprise active ingredients.

If not indicated otherwise, all percentages are by weight relative to the total weight of the composition. "About" or "approx.", as used herein in relation to a numerical value, means said value ± 10 %, preferably ± 5 %. If a numerical value is given without any decimal place, such as "99 %", this refers to "99.0 %", if not indicated otherwise.

The term "sheet", as used herein, relates to a specific form of a solid laundry detergent composition that is characterized by its 3-dimensional shape in that its thickness is small compared to its length and breadth. The term typically relates to rectangular forms but is not limited to those.

All percentages disclosed herein relate, if not indicated otherwise, to % by weight relative to the total weight of the respective composition. If the composition is not defined otherwise, the term relates to the laundry detergent sheet after the drying step.

These and other aspects, features and advantages of the invention become apparent to the skilled person in the following detailed description and claims. Each feature from one aspect of the invention can be used in any other aspect of the invention. Furthermore, the examples contained herein are intended to describe and illustrate the invention, but do not restrict it. In particular, the invention is not limited to these examples.

In various embodiments, the present invention pertains to a method for manufacturing a water-soluble laundry detergent sheet, comprising or consisting of the steps:
(i) providing an aqueous liquid, preferably homogenous, composition comprising, consisting essentially of or consisting of the following components:
   (a) zinc diricinoleate,
   (b) at least one surfactant,
   (c) at least one water-soluble polymer,
   (d) at least one washing booster, wherein said washing booster is selected from polyalkyleneimines and optionally further comprises enzymes,
   (e) optionally at least one perfume component, and
   (f) optionally at least one adjunct detergent ingredient;
(ii) applying the composition of step (i) onto a surface such that it forms a layer on said surface;
(iii) drying said layer to obtain a laundry detergent sheet; and
(iv) optionally cutting the laundry detergent sheet into pieces of a desired shape and size; and
(v) optionally packaging one or more laundry detergent sheets obtained in step (iv),

wherein the zinc diricinoleate preferably is contained in the composition in amounts of from 0.001 to 20 wt.-%, preferably in 0.1 to 10 wt.-%, based on the total weight of the composition,
wherein the composition optionally further comprises at least one profragrance compound selected from the group consisting of silicic acid fragrances, oxazolidine of fragrances, β-thio carbonyl profragrances and mixtures thereof and preferably is contained in the composition in amounts of from 0.001 to 10 wt.-%, preferably in 0.1 to 5 wt.-%, based on the total weight of the composition.

In various embodiments the at least one pro-fragrance compound is present and selected from the group consisting of silicic acid fragrances, especially esters, oxazolidine of fragrances, and β-thio carbonyl profragrances, as well as mixtures thereof. In various embodiments the pro-fragrance compounds are preferably selected from 1-aza-3,7-dioxabicyclo[3.3.0]octane compounds such as those described in WO 2007/087977 A1 and/or β-thio carbonyl profragrances such as those described in WO 2016/135193A1 and WO 2018/037121 A1 and commercially available under the name Haloscent^{®} fom Firmenich SA. Typical amounts of the at least one pro-fragrance compound range from 0.001 to 10 wt.-%, preferably of from 0.1 to 5 wt.-%, based on the total weight of the composition.

The at least one surfactant may be a detersive surfactant selected from the group consisting of anionic, cationic, non-ionic, zwitterionic and amphoteric surfactants as well as combinations thereof. Typical amounts of the at least one surfactant range from 10 to 90 wt.-%, preferably from 25 to 70 wt.-%, based on the total weight of the composition. The amount refers to the total amount of surfactants in the composition.

In another preferred embodiment, the composition contains a mixture of surfactants of the same or different type of surfactants, more preferably a mixture of 2, 3, 4, 5 or more surfactants of the same type or of different types of surfactants, selected from the group consisting of anionic, cationic, non-ionic and amphoteric surfactants.

In various embodiments, the detersive surfactant comprises anionic detersive surfactant. Suitable anionic detersive surfactants are alkoxylated alcohol sulfate anionic detersive surfactants such as linear or branched, substituted or unsubstituted ethoxylated C12-18 alcohol sulfates having an average degree of ethoxylation of from 1 to 10, preferably from 3 to 7. Other suitable anionic detersive surfactant are alkyl benzene sulfonate anionic detersive surfactants such as linear or branched, substituted or unsubstituted C8-18 alkyl benzene sulfonates, preferably linear unsubstituted C10-13 alkyl benzene sulfonates. Other suitable anionic detersive surfactants are alkyl sulfates, alkyl sulfonates, alkyl carboxylates or any mixture thereof.

In various embodiments, the detersive surfactant comprises at least one alkyl benzene sulfonate. Exemplary alkyl benzene sulfonates include but are not limited to linear and branched alkyl benzene sulfonates, preferably linear alkyl benzene sulfonates. Exemplary compounds are those of formula (I)
(I), wherein R' and R" are independently H or alkyl and combined comprise 9 to 19, preferably 9 to 15 and more preferably 9 to 13 carbon atoms. Particularly preferred are dodecyl and tridecyl benzene sulfonates, in particular the sodium salts thereof. While reference is made herein to the sulfonates and particularly the sodium salts thereof, it is understood that the invention also encompasses salts with other metals, ammonium or organic bases, such as alkanolamines. Further, it is understood that the free acid forms, also referred to as "acidic precursors", may also be used.

The detersive anionic surfactant may further or alternatively comprise at least one alkyl ether sulfate. Preferred alkyl ether sulfates are those of formula (II)

R1-O-(AO)n-SO3-X+ (II).

In formula (II) R1 represents a linear or branched, substituted or unsubstituted alkyl group, preferably a linear, unsubstituted alkyl group, more preferably a fatty alcohol moiety. Preferred R1 moieties are selected from the group consisting of decyl, undecyl, dodecyl, tridecyl, tetradecyl, pentadecyl, hexadecyl, heptadecyl, octadecyl, nonadecyl, eicosyl moieties and mixtures thereof, wherein those groups with an even number of carbon atoms are preferred. Particularly preferred R1 moieties are derived from C10-C18 fatty alcohols, such as those derived from coconut oil alcohols, tallow fatty alcohols, lauryl, myristyl, cetyl or stearyl alcohol or from C10-C20 oxoalcohols. AO represents an ethylene oxide (EO) or propylene oxide (PO) group, preferably an ethylene oxide group. The index n represents an integer from 1 to 50, preferably from 1 to 20 and more preferably from 1 to 10. Particularly preferably, n is 1, 2, 3, 4, 5, 6, 7 or 8. X represents a monovalent cation or the n-th part of an n-valent cation, preferred are alkali metal cations, specifically Na+ and K+, most preferably Na+. Further cations X+ may be selected from NH4+, ½ Zn2+, ½ Mg2+, ½ Ca2+, ½ Mn2+, and combinations thereof.

In various embodiments, the detersive surfactants comprise an alkyl ether sulfate selected from fatty alcohol ether sulfates of formula (III)
(III) wherein k = 9 to 19, and n = 1, 2, 3, 4, 5, 6, 7 or 8. Preferred are C10-16 fatty alcohol ether sulfates with 1-7, more preferably 1-3 EO (k = 9-15, n = 1-7, 1-3), even more preferred the C12-14 fatty alcohol ether sulfates with 1-3, particularly 2 EO (k = 11-13, n = 1-3 or 2). The level of ethoxylation is an average value and can, for a specific compound, be an integer or fractional number.

The detersive surfactant may also comprise non-ionic detersive surfactants. Suitable non-ionic detersive surfactants are selected from: C8-18 alkyl alkoxylated alcohols having an average degree of alkoxylation of from 1 to 20, preferably from 3 to 10, most preferred are C12-18 alkyl ethoxylated alcohols having an average degree of alkoxylation of from 3 to 10; and mixtures thereof.

Suitable nonionic surfactants are those of formula (IV)

R2-O-(AO)m-H (IV),

wherein R2 represents a linear or branched substituted or unsubstituted alkyl moiety, AO represents an ethylene oxide (EO) or propylene oxide (PO) group and m is an integer from 1 to 50. In formula (IV) R2 preferably represents a linear or branched, substituted or unsubstituted alkyl group, preferably a linear, unsubstituted alkyl group, particularly preferred a fatty alcohol group. Preferred groups are R2 are selected from decyl, undecyl, dodecyl, tridecyl, tetradecyl, pentadecyl, hexadecyl, heptadecyl, octadecyl, nonadecyl, eicosyl groups and combinations thereof, wherein those groups with an even number of carbon atoms are preferred. Particularly preferred are R2 groups derived from C12-C18 fatty alcohols, such as coconut oil alcohol, tallow oil alcohol, lauryl, myristyl, cetyl or stearyl alcohol or from C10-C20 oxoalcohols. AO represents an ethylene oxide (EO) or propylene oxide (PO) group, preferably an ethylene oxide group. The index m represents an integer from 1 to 50, preferably from 1 to 20 and more preferably from 3 to 10. Particularly preferably, m is 3, 4, 5, 6 or 7.

In various embodiments, the detergent compositions comprise an alkyl ether selected from fatty alcohol ethers of formula (V)
(V) wherein k = 11 to 19, m = 3, 4, 5, 6 or 7. Preferred are C12-18 fatty alcohols with 3-7 EO (k = 11-17, m = 3-7 in formula (V)).

The detergents may further include other nonionic surfactants, such as alkyl glucosides of the general formula RO(G)x, where R is a primary linear or 2-methyl-branched aliphatic radical containing 8 to 22 and preferably 12 to 18 carbon atoms and G stands for a glucose unit. The degree of oligomerization x, which indicates the distribution of monoglucosides and oligoglucosides, is a number of from 1 to 10 and preferably a number of from 1.2 to 1.4.

In various embodiments, the detersive surfactant comprises at least two anionic surfactants, namely at least one alkyl ether sulfate and preferably at last one alkyl benzene sulfonate, and optionally an alkyl ether.

The detersive surfactant may also comprise cationic detersive surfactants. Cationic surfactants are preferably selected from esterquats and/or quaternary ammonium compounds (QACs) of the general formula (RI)(RII)(RIII)(RIV)N+ X-, in which RI to RIV are identical or different C1-22 alkyl groups, C7-28 aryl groups or heterocyclic groups, wherein two or, in the case of an aromatic incorporation as in pyridine, even three groups, form a heterocycle together with the nitrogen atom, for example a pyridinium or imidazolinium compound, and X- denotes halide ions, sulfate ions, hydroxide ions or similar anions. QACs can be prepared by reacting tertiary amines with alkylating agents, such as methyl chloride, benzyl chloride, dimethyl sulfate, dodecyl bromide, but also ethylene oxide. The alkylation of tertiary amines having one long alkyl group and two methyl groups is particularly easy, and the quaternization of tertiary amines having two long groups and one methyl group can also be carried out with the aid of methyl chloride under mild conditions. Amines which have three long alkyl groups or hydroxy-substituted alkyl groups lack reactivity and are, for example, quaternized with dimethyl sulfate. Suitable QACs are, for example, benzalkonium chloride (N-alkyl N,N-dimethyl benzyl ammonium chloride), benzalkone B (m,p-dichloro benzyl dimethyl-C12-alkyl ammonium chloride, benzoxonium chloride (benzyl-dodecyl-bis-(2-hydroxyethyl) ammonium chloride), cetrimonium bromide (N-hexadecyl-N,N-trimethyl ammonium bromide), benzetonium chloride (N,N-dimethyl-N[2-[2-[p-(1,1,3,3-tetramethylbutyl)phenoxy]ethoxy]ethyl]benzyl ammonium chloride), dialkyldimethylammonium chlorides, such as di-n-decyldimethylammonium chloride, didecyldimethylammonium bromide, dioctyldimethylammonium chloride, 1-cetylpyridinium chloride, and thiazoline iodide, as well as mixtures thereof. Preferred QACs are the benzalkonium chlorides having C8-22 alkyl residues, in particular C12-C14 alkylbenzyldimethylammonium chloride. Preferred esterquats are methyl-N-(2-hydroxyethyl)-N,N-di(tallow-acyl-oxyethyl)ammonium methosulfate, bis(palmitoyl)ethyl hydroxyethyl methylammonium methosulfate or methyl-N,N-bis(acyloxyethyl)-N-(2-hydroxyethyl)ammonium methosulfate. Commercially available examples are methyl hydroxyalkyl dialkoyloxyalkylammonium methosulfates commercially available from Stepan under the trademark Stepantex^{®} or the products from BASF SE known by the trade name Dehyquart^{®} or the products from Evonik Industries AG known by the trade name Rewoquat^{®}.

Suitable amphoteric/zwitterionic surfactants include amine oxides and betaines.

The at least one water-soluble polymer is different from the washing booster and surfactants of the present invention and is, in various embodiments, selected from the group consisting of polyvinyl alcohol (PVA), polyethylene glycol (PEG), starch, cellulose, pullulan, xanthan, guar, carrageenan, polyacrylate, and gelatin, preferably from polyvinyl alcohol and starch.

In one preferred embodiment, the composition contains only one water-soluble polymer selected from the group consisting of polyvinyl alcohol (PVA), polyethylene glycol (PEG), starch, cellulose, pullulan, xanthan, guar, carrageenan, polyacrylate, and gelatin, more preferably from polyvinyl alcohol and starch.

In another preferred embodiment, the composition contains a mixture of water-soluble polymers of the same or different type of water-soluble polymers, more preferably a mixture of 2, 3, 4, 5 or more water-soluble polymers of the same type or of different types of water-soluble polymers, selected from the group consisting of polyvinyl alcohol (PVA), polyethylene glycol (PEG), starch, cellulose, pullulan, xanthan, guar, carrageenan, polyacrylate, and gelatin, more preferably from polyvinyl alcohol and starch.

Generally, the at least one water-soluble polymer may be contained in the composition in amounts of from 1 to 80 wt.-%, preferably in amounts of from 10 to 50 wt.-%, more preferably in amounts of from 10 to 30 wt.-%, based on the total weight of the composition.

In a preferred embodiment, the at least one water-soluble polymer selected from the group consisting of polyvinyl alcohol (PVA), polyethylene glycol (PEG), starch, cellulose, pullulan, xanthan, guar, carrageenan, polyacrylate, and gelatin, more preferably from polyvinyl alcohol, and starch, is preferably contained in the composition in an amount of from 1 to 80 wt.-%, more preferably in an amount of from 10 to 50 wt.-%, more preferably in an amount of from 10 to 30 wt.-%, based on the total weight of the composition. The amount refers to the total amount of water-soluble polymers in the composition.

Preferably, polyvinyl alcohol is contained in the composition, more preferably in an amount of from 1 to 80 wt.-%, more preferably in an amount of from 10 to 30 wt.-%, based on the total weight of the composition.

In a further preferred embodiment, starch is contained in the composition, more preferably in an amount of from 1 to 80 wt.-%, more preferably in an amount of from 10 to 50 wt.-%, based on the total weight of the composition.

In another preferred embodiment, polyvinyl alcohol and starch are contained in the composition, more preferably in an amount of from 1 to 80 wt.-%, based on the total weight of the composition.

Furthermore, the composition according to the invention contains at least one washing booster selected from polyalkyleneimines. In various embodiments, the washing booster further comprises enzymes. The washing booster is different form the surfactants and water-soluble polymers of the present invention.

The enzymes may be selected from the types of enzymes commonly used in laundry detergents, including amylases, proteases, lipases, carbohydrases, cellulases, laccases, oxidases, peroxidases, pectate lyases, xanthanases, licheninases and mannanases. Preferably, the enzymes include at least one, preferably two or more of mannanase, xanthanase, licheninase, protease, amylase, cellulase and lipase. Preferred are enzymes of bacterial or fungal origins that have been adapted or modified for use in detergent applications. Suitable enzymes are widely known in the field and commercially available.

In a preferred embodiment, the enzyme is selected from the group of mannanase, xanthanase, and licheninase.

In case the at least one washing booster comprises an enzyme or a combination of enzymes, said enzymes are preferably contained in the composition in amounts of from 0.0001 to 10 wt.-%, more preferably in amounts of from 0.001 to 5 wt.-%, based on the total weight of the composition. The amounts given relate to active protein.

The enzymes may be used in pre-formulated form, typically in form of enzyme preparations that may comprise in addition to the enzymes at least one stabilizer and various auxiliaries. Such enzyme formulations typically comprise up to 50 % by weight of the active enzyme.

Suitable polyalkyleneimines are known in the art and comprise polyethyleneimines and alkoxylated variants thereof. Alkoxylated polyalkyleneimines have a polyalkyleneimine core with one or more alkoxy side chains bonded to at least one nitrogen atom in the polyalkyleneimine core. Preferred are ethoxylated or propoxylated polyalkyleneimines, in particular ethoxylated polyalkyleneimines, more preferable ethoxylated polyethyleneimines.

The average number molecular weight of suitable polyalkyleneimines and alkoxylated variants thereof typically ranges from about 100 to 100,000 Daltons.

Suitable alkoxylated polyalkyleneimines, such as PEI600 EO20, are commercially available, for example from BASF (Ludwigshafen, Germany).

It is preferable that the polyalkyleneimines contained in the composition are present in amounts of from 0.01 to 40 wt.-%, more preferably in amounts of from 0.1 to 30 wt.-%, based on the total weight of the composition.

In various embodiment, the composition contains only one washing booster selected from polyalkylene imines. It may however be preferred that the composition comprises a combination of two or more washing boosters, more preferably a combination of 2, 3, 4, 5 or more different compounds or types of washing boosters, further selected from the group consisting of enzymes polyalkyleneimines and combinations thereof. It may for example be preferred if the composition comprises at least one protease and at least one polyalkyleneimine, preferably a polyethyleneimine or alkoxylated variant thereof. Optionally, it may contain one or more further enzymes, such as amylases, lipases and cellulases.

Furthermore, the composition according to the invention preferably contains at least one perfume component, which is different from the pro-fragrances of the present invention. The at least one perfume component can preferably be of natural or synthetic origin, e.g. selected from esters, ethers, aldehydes, ketones, alcohols and hydrocarbons, as well as perfume oils.

Perfume components of the ester type include, for example, benzyl acetate, phenoxyethyl isobutyrate, p-tert-butylcyclohexyl acetate, linalyl acetate, dimethylbenzylcarbinyl acetate (DMBCA), phenylethyl acetate, benzyl acetate, ethylmethyl phenyl glycinate, allylcyclohexyl propionate, styrallyl propionate, benzyl salicylate, cyclohexylsalicylate, floramat, melusat and jasmacyclate. The ethers include, for example, benzylethylether and ambroxan; the aldehydes include, for example, the linear alkanals with 8 to 18 carbon atoms, citral, citronellal, citronellyl oxyacetaldehyde, cyclamenaldehyde, lilial and bourgeonal; the ketones include, for example, the ionones, α-isomethylionone and methyl cedryl ketone; the alcohols include, for example, anethole, citronellol, eugenol, geraniol, linalool, phenylethyl alcohol and terpineol; the hydrocarbons include mainly terpenes such as limonene and pinene. However, mixtures of various perfume components, which jointly produce a pleasant scent note, are preferred.

Such perfume components may also contain mixtures of natural perfume substances such as those accessible from plant sources, e.g., pine oil, citrus oil, jasmine oil, patchouli oil, rose oil or ylang-ylang oil. Also suitable are muscatel sage oil, chamomile oil, clove oil, lemon balm oil, mint oil, cinnamon leaf oil, linden blossom oil, juniper berry oil, vetiver oil, olibanum oil, galbanum oil and labdanum oil as well as orange blossom oil, neroli oil, orange peel oil and sandalwood oil.

Other traditional perfume substances that may be used within the scope of the present invention include, for example, the essential oils such as angelica root oil, anise oil, arnica blossom oil, sweet basil oil, bay oil, champaca blossom oil, silver fir oil, fir cone oil, elemi oil, eucalyptus oil, fennel oil, spruce needle oil, galbanum oil, geranium oil, ginger grass oil, guaiac wood oil, gurjun balsam oil, helichrysum oil, ho oil, ginger oil, iris oil, cajeput oil, calamus oil, chamomile oil, camphor oil, canaga oil, cardamom oil, cassia oil, pine needle oil, copaiba balsam oil, coriander oil, spearmint oil, caraway oil, cumin oil, lavender oil, lemon grass oil, lime oil, mandarin oil, lemon balm oil, ambrette seed oil, myrrh oil, clove oil, neroli oil, niaouli oil, olibanum oil, origanum oil, palmarosa oil, patchouli oil, Peru balsam oil, petitgrain oil, pepper oil, peppermint oil, allspice oil, pine oil, rose oil, rosemary oil, sandalwood oil, celery seed oil, spike lavender oil, star anise oil, turpentine oil, thuja oil, thyme oil, verbena oil, vetiver oil, juniper berry oil, vermouth oil, wintergreen oil, ylang-ylang oil, ysop oil, cinnamon oil, cinnamon leaf oil, citronella oil, lemon oil and cypress oil as well as compounds selected from the group of ambrettolide, ambroxan, α-amylcinnamaldehyde, anethole, anise aldehyde, anise alcohol, anisole, anthranilic acid methyl ester, acetophenone, benzylacetone, benzaldehyde, benzoic acid ethyl ester, benzophenone, benzyl alcohol, benzyl acetate, benzyl benzoate, benzyl formate, benzyl valerate, borneol, bornyl acetate, boisambrene forte, α-bromostyrene, damascone, damascenone, n-decylaldehyde, n-dodecylaldehyde, eugenol, eugenol methyl ether, eucalyptol, farnesol, fenchone, fenchyl acetate, geranyl acetate, geranyl formate, heliotropin, heptin carboxylic acid methyl ester, heptaldehyde, hydroquinone dimethyl ester, hydroxycinnamyl aldehyde, hydroxycinnamyl alcohol, indole, iron, isoeugenol, isoeugenol methyl ether, isosafrol, jasmine, camphor, carvacrol, carbon, p-cresol methyl ether, coumarin, p-methoxyacetophenone, methyl-n-amyl ketone, methyl anthranilic acid methyl ester, p-methylacetophenone, methyl chavicol, p-methylquinoline, methyl β-naphthyl ketone, methyl n-nonylaldehyde, nonyl alcohol, n-octylaldehyde, p-oxyacetphenone, pentadecanolide, β-phenylethyl alcohol, phenylacetaldehyde-dimethylacetal, phenylacetic acid, pulegon, safrole, salicylic acid isoamyl ester, salicylic acid methyl ester, salicylic acid hexyl ester, salicylic acid cyclohexyl ester, santalol, sandelice, skatol, terpineol, thyme, thymol, troenan, γ-undelactone, vanillin, veratrum aldehyde, cinnamyl aldehyde, cinnamyl alcohol, cinnamic acid, cinnamic acid ethyl ester, cinnamic acid benzyl ester, diphenyl oxide, limonene, linalool, linayl acetate and linalyl propionate, melusat, menthol, menthone, methyl-n-heptenone, pinene, phenyl acetaldehyde, terpinyl acetate, citral, citronellal and mixtures thereof.

In a preferred embodiment, the at least one perfume component is contained in the composition in an amount of from 0.01 to 20 wt.-%, more preferably in an amount of from 0.1 to 5 wt.-%, based on the total weight of the composition. The amount refers to the total amount of perfume components in the composition.

In addition to the afore-mentioned components and different therefrom, the composition may comprise adjunct detergent ingredients. Suitable adjunct detergent ingredients include but are not limited to: bleaches, in particular a source of peroxygen such as percarbonate salts and/or perborate salts, preferred is sodium percarbonate; bleach activators such as tetraacetyl ethylene diamine, oxybenzene sulphonate bleach activators, such as nonanoyl oxybenzene sulphonate, caprolactam bleach activators, imide bleach activators such as N-nonanoyl-N-methyl acetamide, preformed peracids such as N,N-pthaloylamino peroxycaproic acid, nonylamido peroxyadipic acid or dibenzoyl peroxide; polymeric carboxylates, preferably copolymers of maleic acid and acrylic acid and salts thereof; suds suppressing systems such as silicone based suds suppressors; fluorescent whitening agents; photobleaches; fabric-softening agents such as clay, silicone and/or quaternary ammonium compounds; flocculants such as polyethylene oxide; dye transfer inhibitors such as polyvinylpyrrolidone, poly 4-vinylpyridine N-oxide and/or co-polymer of vinylpyrrolidone and vinylimidazole; fabric integrity components such as hydrophobically modified cellulose and oligomers produced by the condensation of imidazole and epichlorhydrin; soil dispersants and soil anti-redeposition aids such as alkoxylated polyamines; anti-redeposition components such as carboxymethyl cellulose and polyesters; sulphamic acid or salts thereof; citric acid or salts thereof as well as other organic builders; inorganic builders, including carbonate salts, such as sodium carbonate, sodium bicarbonate and mixtures thereof, aluminosilicate builders, such as zeolites, in particular zeolite A, zeolite X, zeolite P and zeolite MAP, silicate salts, preferably sodium silicate; dyes such as orange dye, blue dye, green dye, purple dye, pink dye, or any mixture thereof; and further complexing agents, such as phosphonates, including those based on hydroxyl alkanes, amino alkanes or amino acids, such as 1-hydroxyethane-1,1-diphosphonate (HEDP), ethylenediamine tetramethylene phosphonate (EDTMP), diethylenetriaminepentamethylene phosphonate (DTPMP), and lysine tetramethylene phosphonate (LTMP); sodium sulfate; enzyme stabilizers, including protease inhibitors; mineral oil; organic solvents, including monoalcohols, glycerol and propylene glycol; antibacterial and antimicrobial substances; antioxidants; preservatives; bittering agents, and water.

These adjunct ingredients may be contained in the composition in amounts of from 0.01 to 50 wt.-%, preferably in amounts of from 0.01 to 20 wt.-%, more preferably in amounts of from 0.01 to 15 wt.-%, more preferably in amounts of from 0.1 to 10 wt.-%, most preferably in amounts of from 0.1 to 5 wt.-%, based on the total weight of the composition.

In various embodiments, the adjunct detergent ingredients are selected from glycerol, propylene glycol, phosphonate, citric acid, other complexing agents, mineral oil, enzyme stabilizers, preservatives, water, and combinations thereof, more preferably, from mineral oil, organic solvents, preservatives, and water.

The composition may, in various embodiments, comprise mineral oil in amounts of 0.01 to 20 % by weight, preferably 0.1 to 5 % by weight, relative to the total weight of the dried laundry sheet.

In a preferred embodiment, preservatives are contained in the composition in an amount of from 0.001 to 10 wt.-%, preferably in amounts of from 0.1 to 5 wt.-%, based on the total weight of the composition.

The solvent content, with the exception of water, may range from 0 to 15 % by weight, preferably from 0.3 to 10 % by weight, relative to the total weight of the dried laundry sheet.

In a preferred embodiment, the laundry detergent sheet according to the invention contains up to 10 wt.-% of water, more preferably up to 5 wt.-% of water, based on the total weight sheet.

In various embodiments, the laundry detergent compositions are phosphate-free, i.e. comprise less than 1 wt.-% phosphate builder and preferably are free from phosphate builders. The term "phosphate-free", as used herein, does not relate to phosphonates.

In various embodiments of the inventive methods, the applying step (ii) comprises moving at least a portion of said surface in a rising direction, contacting the rising portion of said surface with said composition and allowing excess composition to drain off said rising portion of said surface in a direction opposite the rising direction. Said movable surface may preferably be a conveyor, with said rising portion of said conveyor being curved or, in alternative embodiments, non-curved. In preferred embodiments, said movable surface is a cylinder rotatable about a horizontal axis with said rising portion on one side and a descending portion on the other side. In all of the afore-mentioned embodiments, said surface may preferably be heated.

The methods of the invention may be carried out in a continuous manufacturing process.

In the methods of the invention, the application in step (ii) may be performed via extrusion or spraying.

The drying step (iii) of the method may be an active drying step. Typically, drying is carried out at elevated temperatures, such as from about 70 to about 90 °C, preferably in the range of 75 to 85 °C. The drying is carried out for a suitable period of time that allows to control the amount of residual in the laundry detergent sheet. Suitable drying times may range from 0.1 seconds to 5 minutes, preferably 1 second to 1 minute.

Depending on the drying conditions, the laundry detergent sheet obtained in step (iii) may contain residual amounts of water. In various embodiments it is preferred that it contains up to 10 wt.-% of water, preferably up to 5 wt.-% of water, based on the total weight of the laundry detergent sheet.

The laundry detergent sheet provides a detergent composition in a form and shape suitable for use in a washing process. The laundry detergent sheet may preferably be a unit dose form that allows simple dosing of the detergent by the consumer. Preferred applications are in textile laundry applications, more preferably in automatic washing machines, such as front loaders or top loaders commonly used by consumers. When in contact with a sufficient amount of water, like in conventional automatic washing machines and typical laundry applications, the laundry detergent sheet dissolves in the water and forms the washing liquor.

The dimensions of the laundry detergent sheet are selected such that the desired ease of handling, dosage and solubility are ensured. As a consequence, the thickness of the sheet preferably ranges from 0.1 mm to 2.5 mm, preferably from 0.25 mm to 1.5 mm, more preferably from 0.7 to 0.9 mm. Thicker sheets may not completely dissolved in a common washing cycle. Thinner sheets might not be robust enough and show cracks after storage which is undesirable due to reduced consumer acceptance. The length and breadth of the sheet are preferably in the range of from 5 cm x 5 cm to 40 cm x 40 cm, more preferably about 25 cm x about 12 cm. It will, however, be appreciated that any other suitable dimensions may be used.

The laundry detergent sheet is preferably formed to a density of 40 to 200 g/m2, 40 to 80 g/m2, 55 to 75 g/m2, or 60 to 75 g/m2. The density can be determined according to ISO 9073-1 (of the year 1989). The sheet according to the invention typically has a total weight of from 0.1 to 90 g, more preferably of from 1 to 10 g.

The sheet is water-soluble. "Water-soluble", as used in this connection, means that the sheet when placed into 2 liters of 20 °C deionized water is dissolved to an extent of at least 80 wt.-%, preferably to at least 90 wt.-% more preferably completely, i.e. 100%, after 2 minutes, preferably 1 minute, more preferably 30 seconds. Completely dissolved, as used in this context, means that no residual solids remain visible with the naked eye.

Preferably, the sheet according to the invention dissolves within 0.1 seconds to 60 minutes when the sheet is in contact with water, preferably within a normal washing cycle of an automatic washing machine.

In various embodiments, the laundry detergent sheet obtained in step (iii) is dissolvable in a washing process, preferably in 0.1 seconds to 60 minutes and/or has dimensions of from 5 cm x 5 cm to 40 cm x 40 cm, more preferably 25 cm x 12 cm, and/or has a total weight of from 0.1 to 90 g, preferably of from 1 to 10 g, and/or has a thickness of 0.1 to 2.5 mm, preferably 0.25 to 1.5 mm, more preferably 0.7 to 0.9 mm.

In preferred embodiments, the sheet according to the invention is in unit dose form. The sheet may be designed such that it can directly be placed in the automatic washing machine, preferably the drum, such that it comes into contact with the textiles to be cleaned during the washing process. While its use may be combined with additional adjunct detergent ingredients, it can be preferred that the laundry detergent sheet of the invention is sufficient for textile cleaning, i.e. no further treatment of the textiles before or after the washing process is necessary.

Devices suitable for carrying out the method of the present invention are disclosed in US 2015/0218497 A1. Furthermore, all process steps described in US 2015/0218497 A1 can be similarly applied in the methods of the present invention. For example, in a preferred embodiment of the present invention, the composition is provided in form of a first shelf-stable solution and a second non-shelf-stable solution. A person skilled in the art is routinely aware of how to prepare such solutions and which components can be employed in the respective solutions.

Preferably, the components (a) to (d) and optionally the components (f) of the composition are mixed with water to form a homogeneous liquid composition, before they are applied to the surface. Any conventional mixing methods of the art that are known for these purposes are suitable and can be employed.

"Liquid composition", as used herein, includes compositions which are fluid or flowable at standard conditions (20 °C, 1013 mbar) but also comprises gel-like and paste-like compositions. In particular, non-Newtonian liquids, for example those have a yield point, are also encompassed by this term.

The water content of liquid compositions, as used herein, may be measured by Karl Fischer titration (Angewandte Chemie 1935, 48, 394-396; ISBN 3-540-12846-8 Eugen Scholz).

Preferably, the liquid composition has a viscosity of 50 to 100,000 mPa·s at 20 °C, more preferably of 1,000 to 50,000 mPa·s at 20 °C, preferably measured with a Brookfield viscometer (Brookfield DI-I Prime, spindle 3, 10 rpm).

In a preferred embodiment, the liquid composition has a water content of 0.1 to 95 wt.-%, preferably 10 to 80 wt.-%, and particularly 25 to 70 wt.-%, based on the total weight of the liquid composition. In case of a gel or paste, the water content can also be lower and can be 30 wt.-% or less, preferably 20 wt.-% or less, particularly 15 wt.-% or less.

In a preferred embodiment, the obtained sheet contains up to 10 wt.-% of water, more preferably up to 5 wt.-% water, based on the total weight of the sheet.

After manufacturing, the sheet can be packaged into a suitable packaging, which may be a paper or plastic package, preferably a plastic package. More preferably the package does not allow water to enter the package. Also suitable are polymeric water-soluble films.

The invention also relates to methods for cleaning textiles in which the laundry detergent sheets described herein are used as well as the use of the sheets according to the invention for cleaning textiles. In the course of these methods and uses, the textiles to be cleaned are contacted with the laundry detergent sheet according to the invention or the washing liquor produced by dissolving said sheet in water, preferably in a washing process.

In these applications, the laundry detergent sheet according to the invention is preferably in a single unit dose form for use in one washing cycle.

In the claimed methods and uses, the textiles to be cleaned and the laundry detergent sheet according to the invention are preferably placed in the drum of an automatic washing machine and the washing cycle is started, preferably without the addition of a further washing detergent. During the washing process, the sheet comes into contact with water and dissolves therein to form the washing liquor. In various embodiments, the sheets described herein provide for an improved washing performance, in particular on oily, enzyme-sensitive, and/or bleachable stains.

The invention is further illustrated by the following examples without being limited thereto. Examples

### Example 1

The components are mixed to provide the aqueous liquid composition, which subsequently is applied to a heated cylinder. The cylinder is rotated with a suitable velocity, so that the composition dries by evaporating water and thus forms the laundry detergent sheet. The dried sheet is then cut into suitable pieces for use as a unit dose.

### Example 2

Textiles were washed with the obtained laundry detergent sheet. Subsequently the washed textiles are sprayed with artificial sudor and are evaluated by subjects after given time intervals with regard to freshness and malodor. Both parameters are judged on a scale from 1-10, in which 1 means low scent and 10 means high scent. Judgement can take place directly, after 1, 2 4, 8 and 24 hours or individually.

## Claims

1. A method for manufacturing a water-soluble laundry detergent sheet, the method comprising, consisting essentially of or consisting of the steps:
(i) providing an aqueous liquid, preferably homogenous, composition comprising, consisting essentially of or consisting of the following components:
(a) zinc diricinoleate,
(b) at least one surfactant,
(c) at least one water-soluble polymer,
(d) at least one washing booster, wherein said washing booster is selected from polyalkyleneimines and optionally further comprises enzymes,
(e) optionally at least one perfume component, and
(f) optionally at least one adjunct detergent ingredient;
(ii) applying the composition of step (i) onto a surface such that it forms a layer on said surface;
(iii) drying said layer to obtain a laundry detergent sheet; and
(iv) optionally cutting the laundry detergent sheet into pieces of a desired shape and size; and
(v) optionally packaging one or more laundry detergent sheets obtained in step (iv),
wherein the zinc diricinoleate preferably is contained in the composition in amounts of from 0.001 to 20 wt.-%, preferably in 0.1 to 10 wt.-%, based on the total weight of the composition,
wherein the composition optionally further comprises at least one profragrance compound selected from the group consisting of silicic acid fragrances, oxazolidine of fragrances, β-thio carbonyl profragrances and mixtures thereof and preferably is contained in the composition in amounts of from 0.001 to 10 wt.-%, preferably in 0.1 to 5 wt.-%, based on the total weight of the composition.

2. The method according to claim 1, wherein
(1) the at least one surfactant is selected from the group consisting of anionic, cationic, non-ionic, and amphoteric surfactants; and/or
(2) the at least one surfactant is contained in the composition in amounts of from 10 to 90 wt.-%, preferably in amounts of from 25 to 70 wt.-%, based on the total weight of the composition.

3. The method according to any of claims 1 to 2, wherein
(1) the at least one water-soluble polymer is selected from the group consisting of polyvinyl alcohol (PVA), polyethylene glycol (PEG), starch, cellulose, pullulan, xanthan, guar, carrageenan, polyacrylate, and gelatin, preferably from polyvinyl alcohol and starch; and/or
(2) the at least one water-soluble polymer is contained in the composition in amounts of from 1 to 80 wt.-%, preferably in amounts of from 10 to 50 wt.-%, more preferably in amounts of from 10 to 30 wt.-%, based on the total weight of the composition.

4. The method according to any of claims 1 to 3, wherein
(1) the at least one washing booster comprises at least one enzyme, preferably contained in the composition in amounts of from 0.0001 to 10 wt.-%, more preferably in amounts of from 0.001 to 5 wt.-%, based on the total weight of the composition, or
(2) the at least one washing booster comprises at least one polyalkyleneimine, preferably polyethyleneimine or alkoxylated variant thereof, in amounts of from 0.01 to 40 wt.-%, more preferably in amounts of from 0.1 to 30 wt.-%, based on the total weight of the composition.

5. The method according to any of claims 1 to 4, wherein the at least one perfume component is contained in the composition in amounts of from 0.01 to 20 wt.-%, preferably in amounts of from 0.1 to 5 wt.-%, based on the total weight of the composition.

6. The method according to any of claims 1 to 5, wherein
(1) the at least one adjunct detergent ingredient is selected from the group consisting of: bleaches; bleach activators; polymeric carboxylates; suds suppressing systems; fluorescent whitening agents; photobleaches; fabric-softening agents; flocculants; dye transfer inhibitors; fabric integrity components; soil dispersants and soil anti-redeposition aids; anti-redeposition components; sulphamic acid or salts thereof; citric acid or salts thereof as well as other organic builders; inorganic builders; dyes; further complexing agents; sodium sulfate; enzyme stabilizers; mineral oil; organic solvents; antibacterial and antimicrobial substances; antioxidants; preservatives; bittering agents; and water; and/or
(2) the at least one adjunct detergent ingredient is contained in the composition in amounts of from 0.01 to 50 wt.-%, preferably in amounts of from 0.01 to 20 wt.-%, more preferably in amounts of from 0.01 to 15 wt.-%, more preferably in amounts of from 0.1 to 10 wt.-%, most preferably in amounts of from 0.1 to 5 wt.-%, based on the total weight of the composition.

7. The method according to any of claims 1 to 6, wherein
(1) the applying step (ii) comprises moving at least a portion of said surface in a rising direction, and contacting the rising portion of said surface with said composition and allow excess composition to drain off said rising portion of said surface in a direction opposite the rising direction, wherein said movable surface preferably is a conveyor, more preferably wherein said rising portion of said conveyor is curved or non-curved, or
wherein said movable surface is preferably a cylinder rotatable about a horizontal axis with said rising portion on one side and a descending portion on the other side; and/or
(2) wherein in the applying step (ii) said surface is heated; and/or
(3) said applying step (ii) is carried out via extrusion or spraying.

8. The method according to any of claims 1 to 7, wherein
(1) the drying step (iii) is an active drying step; and/or
(2) the drying step is carried out at 70 to 90 °C, preferably 75 to 85 °C; and/or
(3) the drying is carried out for 0.1 seconds to 5 minutes, preferably 1 second to 1 minute.

9. The method according to any of claims 1 to 8, wherein the laundry detergent sheet obtained in step (iii) contains up to 10 wt.-% of water, preferably up to 5 wt.-% of water, based on the total weight of the laundry detergent film.

10. The method according to any of claims 1 to 9, wherein the laundry detergent sheet obtained in step (iii)
(1) is dissolvable in a washing process, preferably in 0.1 seconds to 60 minutes; and/or
(2) has dimensions of from 5 cm x 5 cm to 40 cm x 40 cm, more preferably 25 cm x 12 cm; and/or
(3) has a total weight of from 0.1 to 90 g, preferably of from 1 to 10 g; and/or
(4) has a thickness of 0.1 to 2.5 mm, preferably 0.25 to 1.5 mm, more preferably 0.7 to 0.9 mm.

11. A laundry detergent sheet obtainable by the method according to any of claims 1 to 10.

12. Method for cleaning textiles, comprising contacting the textiles with the laundry detergent sheet according to claim 11.

13. Use of a laundry detergent sheet according to claim 11 for cleaning textiles.

## Patentansprüche

1. Verfahren zum Herstellen eines wasserlöslichen Wäschewaschmittelblatts, wobei das Verfahren folgende Schritte umfasst, daraus besteht oder im Wesentlichen daraus besteht:
(i) Bereitstellen einer wässrigen flüssigen, vorzugsweise homogenen Zusammensetzung, die folgende Komponenten umfasst, daraus besteht oder im Wesentlichen daraus besteht:
(a) Zinkdiricinoleat,
(b) mindestens einem Tensid,
(c) optional mindestens einem wasserlöslichen Polymer,
(d) mindestens einem Waschverstärker, wobei der Waschverstärker aus Polyalkyleniminen ausgewählt ist und optional ferner Enzyme umfasst,
(e) optional mindestens einer Parfumkomponente, und
(f) optional mindestens einem zusätzlichen Waschmittelinhaltsstoff;
(ii) Auftragen der Zusammensetzung aus Schritt (i) auf eine Oberfläche, so dass sie eine Schicht auf der Oberfläche bildet;
(iii) Trocknen der Schicht, um ein Wäschewaschmittelblatt zu erhalten; und
(iv) optional Schneiden des Wäschewaschmittelblatts in Stücke einer gewünschten Form und Größe; und
(v) optional Verpacken eines oder mehrerer Wäschewaschmittelblätter, die in Schritt (iv) erhalten wurden,
wobei das Zinkdiricinoleat vorzugsweise in der Zusammensetzung in Mengen von 0,001 bis 20 Gew.-%, vorzugsweise 0,1 bis 10 Gew.-%, bezogen auf das Gesamtgewicht der Zusammensetzung, enthalten ist, wobei die Zusammensetzung optional ferner mindestens eine Profragrance-Verbindung umfasst, die ausgewählt ist aus der Gruppe bestehend aus Kieselsäure-Duftstoffen, Oxazolidin von Duftstoffen, β-Thiocarbonyl-Profragrances und Gemischen davon, und vorzugsweise in der Zusammensetzung in Mengen von 0,001 bis 10 Gew.-%, vorzugsweise 0,1 bis 5 Gew.-%, bezogen auf das Gesamtgewicht der Zusammensetzung, enthalten ist.

2. Verfahren nach Anspruch 1, wobei
(1) das mindestens eine Tensid aus der Gruppe bestehend aus anionischen, kationischen, nichtionischen und amphoteren Tensiden ausgewählt ist; und/oder
(2) das mindestens eine Tensid in der Zusammensetzung in Mengen von 10 bis 90 Gew.-%, vorzugsweise in Mengen von 25 bis 70 Gew.-%, bezogen auf das Gesamtgewicht der Zusammensetzung, enthalten ist.

3. Verfahren nach einem der Ansprüche 1 bis 2, wobei
(1) das mindestens eine wasserlösliche Polymer aus der Gruppe bestehend aus Polyvinylalkohol (PVA), Polyethylenglykol (PEG), Stärke, Cellulose, Pullulan, Xanthan, Guar, Carrageenan, Polyacrylat und Gelatine, vorzugsweise Polyvinylalkohol und Stärke, ausgewählt ist; und/oder
(2) das mindestens eine wasserlösliche Polymer in der Zusammensetzung in Mengen von 1 bis 80 Gew.-%, vorzugsweise in Mengen von 10 bis 50 Gew.-%, stärker bevorzugt in Mengen von 10 bis 30 Gew.-%, bezogen auf das Gesamtgewicht der Zusammensetzung, enthalten ist.

4. Verfahren nach einem der Ansprüche 1 bis 3, wobei
(1) der mindestens eine Waschverstärker mindestens ein Enzym umfasst, das vorzugsweise in der Zusammensetzung in Mengen von 0,0001 bis 10 Gew.-%, stärker bevorzugt in Mengen von 0,001 bis 5 Gew.-%, bezogen auf das Gesamtgewicht der Zusammensetzung, enthalten ist, oder
(2) der mindestens eine Waschverstärker mindestens ein Polyalkylenimin, vorzugsweise Polyethylenimin oder eine alkoxylierte Variante davon, in Mengen von 0,01 bis 40 Gew.-%, stärker bevorzugt in Mengen von 0,1 bis 30 Gew.-%, bezogen auf das Gesamtgewicht der Zusammensetzung, umfasst.

5. Verfahren nach einem der Ansprüche 1 bis 4, wobei die mindestens eine Parfumkomponente in der Zusammensetzung in Mengen von 0,01 bis 20 Gew.-%, vorzugsweise in Mengen von 0,1 bis 5 Gew.-%, bezogen auf das Gesamtgewicht der Zusammensetzung, enthalten ist.

6. Verfahren nach einem der Ansprüche 1 bis 5, wobei
(1) der mindestens eine zusätzliche Waschmittelinhaltsstoff ausgewählt ist aus der Gruppe bestehend aus: Bleichmitteln; Bleichaktivatoren; polymeren Carboxylaten; Schauminhibitorsystemen; fluoreszierenden Aufhellungsmitteln; Fotobleichmitteln; Weichspülmitteln; Flockungsmitteln; Farbübertragungsinhibitoren; Gewebeintegritätskomponenten; Bodendispersionsmitteln und Bodenantiredepositionshilfen; Antiredepositionskomponenten; Sulfaminsäure oder deren Salzen; Citronensäure oder deren Salzen sowie anderen organischen Gerüststoffen; anorganischen Gerüststoffen; Farbstoffen; weiteren Komplexierungsmitteln; Natriumsulfat; Enzymstabilisatoren; Mineralöl; organischen Lösungsmitteln; antibakteriellen und antimikrobiellen Substanzen; Antioxidantien; Konservierungsmitteln; Bitterstoffen; und Wasser; und/oder
(2) der mindestens eine zusätzliche Waschmittelinhaltsstoff in der Zusammensetzung in Mengen von 0,01 bis 50 Gew.-%, vorzugsweise in Mengen von 0,01 bis 20 Gew.-%, stärker bevorzugt in Mengen von 0,01 bis 15 Gew.-%, stärker bevorzugt in Mengen von 0,1 bis 10 Gew.-%, am stärksten bevorzugt in Mengen von 0,1 bis 5 Gew.-%, bezogen auf das Gesamtgewicht der Zusammensetzung, enthalten ist.

7. Verfahren nach einem der Ansprüche 1 bis 6, wobei
(1) der Auftragungsschritt (ii) das Bewegen mindestens eines Abschnitts der Oberfläche in einer ansteigenden Richtung und das Inkontaktbringen des ansteigenden Abschnitts der Oberfläche mit der Zusammensetzung und das Abfließenlassen überschüssiger Zusammensetzung von dem ansteigenden Abschnitt der Oberfläche in einer Richtung, die der ansteigenden Richtung entgegengesetzt ist, umfasst, wobei die bewegliche Oberfläche vorzugsweise ein Förderer ist, wobei stärker bevorzugt der ansteigende Abschnitt des Förderers gekrümmt oder nicht gekrümmt ist, oder
wobei die bewegliche Oberfläche vorzugsweise ein um eine horizontale Achse drehbarer Zylinder mit dem ansteigenden Abschnitt auf einer Seite und einem absteigenden Abschnitt auf der anderen Seite ist; und/oder
(2) wobei in dem Auftragungsschritt (ii) die Oberfläche erwärmt wird; und/oder
(3) der Auftragungsschritt (ii) durch Extrusion oder Sprühen ausgeführt wird.

8. Verfahren nach einem der Ansprüche 1 bis 7, wobei
(1) der Trocknungsschritt (iii) ein aktiver Trocknungsschritt ist; und/oder
(2) der Trocknungsschritt bei 70 bis 90 °C, vorzugsweise 75 bis 85 °C, ausgeführt wird; und/oder
(3) das Trocknen 0,1 Sekunden bis 5 Minuten, vorzugsweise 1 Sekunde bis 1 Minute, ausgeführt wird.

9. Verfahren nach einem der Ansprüche 1 bis 8, wobei das in Schritt (iii) erhaltene Wäschewaschmittelblatt zu bis zu 10 Gew.-% Wasser, vorzugsweise zu bis zu 5 Gew.-% Wasser, bezogen auf das Gesamtgewicht des Wäschewaschmittelfilms, enthält.

10. Verfahren nach einem der Ansprüche 1 bis 9, wobei das in Schritt (iii) erhaltene Wäschewaschmittelblatt
(1) in einem Waschvorgang, vorzugsweise in 0,1 Sekunde bis 60 Minuten, in Lösung gehen kann; und/oder
(2) Abmessungen von 5 cm x 5 cm bis 40 cm x 40 cm, stärker bevorzugt 25 cm x 12 cm, aufweist; und/oder
(3) ein Gesamtgewicht von 0,1 bis 90 g, vorzugsweise von 1 bis 10 g, aufweist; und/oder
(4) eine Dicke von 0,1 bis 2,5 mm, vorzugsweise 0,25 bis 1,5 mm, stärker bevorzugt 0,7 bis 0,9 mm, aufweist.

11. Wäschewaschmittelblatt, das durch das Verfahren nach einem der Ansprüche 1 bis 10 erhältlich ist.

12. Verfahren zum Reinigen von Textilien, umfassend das Inkontaktbringen der Textilien mit dem Wäschewaschmittelblatt nach Anspruch 11.

13. Verwenden eines Wäschewaschmittelblatts nach Anspruch 11 zum Reinigen von Textilien.

## Revendications

1. Procédé de fabrication d'une feuille de détergent delessive hydrosoluble, le procédé comprenant, consistant essentiellement ou consistant aux étapes suivantes :
(i) la fourniture d'une composition aqueuse liquide, de préférence homogène, comprenant, consistant essentiellement ou consistant aux composants suivants :
(a) diricinoléate de zinc,
(b) au moins un tensioactif,
(c) au moins un polymère hydrosoluble,
(d) au moins un renforçateur de lavage, dans lequel ledit renforçateur de lavage est choisi parmi les polyalkylèneimines et comprenant éventuellement en outre des enzymes,
(e) éventuellement au moins un composant de parfum, et
(f) éventuellement au moins un ingrédient détergent auxiliaire ;
(ii) l'application de la composition de l'étape (i) sur une surface de sorte qu'elle forme une couche sur ladite surface ;
(iii) le séchage de ladite couche pour obtenir une feuille de détergent de lessive ; et
(iv) éventuellement la découpe de la feuille de détergent de lessive en morceaux de forme et taille souhaitées ; et
(v) éventuellement le conditionnement d'une ou plusieurs feuilles de détergent de lessive obtenues à l'étape (iv),
dans lequel le diricinoléate de zinc est de préférence contenu dans la composition en des quantités allant de 0,001 à 20 % en poids, de préférence de 0,1 à 10 % en poids, sur la base du poids total de la composition, dans lequel la composition comprend en outre éventuellement au moins un composé de proparfum choisi parmi le groupe constitué de parfums acide silicique, oxazolidine de parfums, proparfums β-thio carbonyle et des mélanges de ceux-ci et de préférence est contenu dans la composition en des quantités allant de 0,001 à 10 % en poids, de préférence de 0,1 à 5 % en poids, sur la base du poids total de la composition.

2. Procédé selon la revendication 1, dans lequel
(1) l'au moins un tensioactif est choisi parmi le groupe constitué de tensioactifs anioniques, cationiques, non ioniques et amphotères ; et/ou
(2) l'au moins un tensioactif est contenu dans la composition en des quantités allant de 10 à 90 % en poids, de préférence en des quantités allant de 25 à 70 % en poids, sur la base du poids total de la composition.

3. Procédé selon l'une quelconque des revendications 1 à 2, dans lequel
(1) l'au moins un polymère hydrosoluble est choisi parmi le groupe constitué d'alcool polyvinylique (PVA), Ipolyéthylène glycol (PEG), amidon, cellulose, pullulane, xanthane, guar, carraghénane, polyacrylate et gélatine, de préférence parmi l'alcool polyvinylique et l'amidon ; et/ou
(2) l'au moins un polymère hydrosoluble est contenu dans la composition en des quantités allant de 1 à 80 % en poids, de préférence en des quantités allant de 10 à 50 % en poids, plus préférablement en des quantités allant de 10 à 30 % en poids, sur la base du poids total de la composition.

4. Procédé selon l'une quelconque des revendications 1 à 3, dans lequel
(1) l'au moins un renforçateur de lavage comprend au moins une enzyme, de préférence contenue dans la composition en des quantités allant de 0,0001 à 10 % en poids, plus préférablement en des quantités allant de 0,001 à 5 % en poids, sur la base du poids total de la composition, ou
(2) l'au moins un renforçateur de lavage comprend au moins une polyalkylèneimine, de préférence une polyéthylèneimine ou une variante alcoxylée de celle-ci, en des quantités allant de 0,01 à 40 % en poids, plus préférablement en des quantités allant de 0,1 à 30 % en poids, sur la base du poids total de la composition.

5. Procédé selon l'une quelconque des revendications 1 à 4, dans lequel l'au moins un composant de parfum est contenu dans la composition en des quantités allant de 0,01 à 20 % en poids, de préférence en des quantités allant de 0,1 à 5 % en poids, sur la base du poids total de la composition.

6. Procédé selon l'une quelconque des revendications 1 à 5, dans lequel
(1) l'au moins un ingrédient détergent auxiliaire est choisi parmi le groupe constitué : d"agents de blanchiment ; d'activateurs de blanchiment ; de carboxylates polymères ; de systèmes de suppression de mousse ; d'agents de blanchiment fluorescents ; de photoblanchiments ; d'agents adoucissants textiles ; de floculants ; d'inhibiteurs de transfert de colorant ; de composants d'intégrité de tissu ; d'aides dispersants de sol et anti-redéposition des sols ; de composants anti-redéposition ; d'acide sulfamique ou ses sels ; d'acide citrique ou ses sels ainsi que d'autres adjuvants organiques ; d'adjuvants inorganiques ; de colorants ; d'autres agents complexants ; de sulfate de sodium ; de stabilisateurs d'enzymes ; d'huile minérale ; de solvants organiques ; de substances antibactériennes et antimicrobiennes ; d'antioxydants ; de conservateurs ; d"agents amérisants ; et d'eau ; et/ou
(2) l'au moins un ingrédient détergent auxiliaire est contenu dans la composition en des quantités allant de 0,01 à 50 % en poids, de préférence en des quantités allant de 0,01 à 20 % en poids, plus préférablement en des quantités allant de 0,01 à 15 % en poids, plus préférablement en des quantités allant de 0,1 à 10 % en poids, le plus préférablement en des quantités allant de 0,1 à 5 % en poids, sur la base du poids total de la composition.

7. Procédé selon l'une quelconque des revendications 1 à 6, dans lequel
(1) l'étape d'application (ii) comprend le déplacement d'au moins une partie de ladite surface dans une direction ascendante, et la mise en contact de la partie ascendante de ladite surface avec ladite composition et permet à une composition en excès de drainer ladite partie ascendante de ladite surface dans une direction opposée à la direction ascendante, dans lequel ladite surface mobile est de préférence un transporteur, plus préférablement dans lequel ladite partie ascendante dudit transporteur est incurvée ou non incurvée, ou
dans lequel ladite surface mobile est de préférence un cylindre rotatif autour d'un axe horizontal avec ladite partie ascendante sur un côté et une partie descendante sur l'autre côté ; et/ou
(2) dans lequel dans l'étape d'application (ii) de ladite surface est chauffée ; et/ou
(3) ladite étape d'application (ii) est réalisée par extrusion ou pulvérisation.

8. Procédé selon l'une quelconque des revendications 1 à 7, dans lequel
(1) l'étape de séchage (iii) est une étape de séchage active ; et/ou
(2) l'étape de séchage est réalisée de 70 à 90 °C, de préférence de 75 à 85 °C ; et/ou
(3) le séchage est réalisé pendant 0,1 seconde à 5 minutes, de préférence de 1 seconde à 1 minute.

9. Procédé selon l'une quelconque des revendications 1 à 8, dans lequel la feuille de détergent de lessive obtenue à l'étape (iii) contient jusqu'à 10 % en poids d'eau, de préférence jusqu'à 5 % en poids d'eau, sur la base du poids total du film de détergent de lessive.

10. Procédé selon l'une quelconque des revendications 1 à 9, dans lequel la feuille de détergent de lessive obtenue à l'étape (iii)
(1) est soluble dans un processus de lavage, de préférence en 0,1 seconde à 60 minutes ; et/ou
(2) a des dimensions allant de 5 cm x 5 cm à 40 cm x 40 cm, plus préférablement de 25 cm x 12 cm ; et/ou
(3) a un poids total allant de 0,1 à 90 g, de préférence de 1 à 10 g ; et/ou
(4) a une épaisseur de 0,1 à 2,5 mm, de préférence de 0,25 à 1,5 mm, plus préférablement de 0,7 à 0,9 mm.

11. Feuille de détergent de lessive pouvant être obtenue par le procédé selon l'une quelconque des revendications 1 à 10.

12. Procédé de nettoyage de textiles, comprenant la mise en contact des textiles avec la feuille de détergent de lessive selon la revendication 11.

13. Utilisation d'une feuille de détergent de lessive selon la revendication 11 pour le nettoyage de textiles.
